# EUROPEAN PATENT SPECIFICATION

(11) **EP 2 208 626 B1**
(45) Date of publication and mention of the grant of the patent: **03.10.2012**
(21) Application number: 08849109.7
(22) Date of filing: 11.11.2008
(51) Int. Cl.: B60H 1/24, B60H 1/00

(54) **VENTILATOR FOR VEHICLE**
LÜFTER FÜR EIN FAHRZEUG
VENTILATEUR POUR VÉHICULE

(30) Priority: 12.11.2007 JP 2007293456
(43) Date of publication of application: 21.07.2010
(73) Proprietor: Toyota Boshoku Kabushiki Kaisha, Kariya-shi, Aichi 448-8651 (JP)
(72) Inventor: IIDA, Kenji, Kariya-shi Aichi 448-8651 (JP); SAKUMA, Wataru, Kariya-shi Aichi 448-8651 (JP)
(74) Representative: TBK
(86) International application number: PCT/JP2008/070465
(87) International publication number: WO 2009/063848

(56) References cited:
- DE-A1- 10 348 164
- JP-A- 8 142 648
- JP-A- 2004 148 989
- JP-A- 2006 038 721
- JP-A- 2006 220 623
- JP-A- 2006 232 154
- JP-A- 2006 232 154

## Description

### TECHNICAL FIELD

The present invention relates to a ventilating apparatus for a vehicle such as a passenger car, which apparatus ventilates a passenger compartment of the vehicle when there is no occupant in the passenger compartment. A ventilating apparatus according to the preamble of claim 1 is known from DE-A1- 103 48 164.

### BACKGROUND ART

A ventilating apparatus has been proposed that includes a gas concentration detector, which detects the gas concentration in the passenger compartment, in particular, the concentration of carbon dioxide (CO₂). The ventilating apparatus operates to ventilate the passenger compartment when a detection value of the carbon dioxide concentration detected by the gas concentration detector exceeds a predetermined value. Such a gas concentration detector used in the vehicle ventilating apparatus includes, for example, one infrared emitter and two infrared sensors as disclosed in Patent Document 1 and Patent Document 2. The two infrared sensors detect different wavelength components of infrared radiation output from the infrared emitter. The detection results of the two infrared sensors are compared with each other to cancel changes over time (time degradation) of the infrared emitter and the infrared sensors, so that the gas concentration detector reliably detects the carbon dioxide concentration in the passenger compartment.

However, in addition to the two infrared sensors, the gas concentration detector needs to be provided with interferometer mirrors or filters for transmitting, to the infrared sensors, infrared radiation having wavelength components each corresponding to one of the infrared sensors. Thus, the gas concentration detector has a complicated structure and a large number of components. This increases the manufacturing costs of the vehicle ventilating apparatus.
Patent Document 1: Japanese Laid-Open Patent Publication No. 2006-220623
Patent Document 2: Japanese Laid-Open Patent Publication No. 2006-38721

### DISCLOSURE OF THE INVENTION

Accordingly, it is an objective of the present invention to provide a vehicle ventilating apparatus that has a simple structure and a reduced number of components.

To achieve the above objective, the present invention provides a vehicle ventilating apparatus, which includes temperature detecting means, determining means, and a duct. The temperature detecting means detects a temperature in a passenger compartment of a vehicle. The determining means determines whether there is any occupant in the passenger compartment. The duct connects the inside and the outside of the passenger compartment. The duct is provided with a fan located inside the duct. When the temperature in the passenger compartment exceeds a specified value in a state where there is no occupant in the passenger compartment, the fan is operated so that the air in the passenger compartment is discharged to the outside of the vehicle through the duct. The vehicle ventilating apparatus further includes a concentration sensor, deciding means, detection command means, and setting means. The concentration sensor detects carbon dioxide concentration in the passenger compartment. The deciding means decides the operation of a device mounted on the vehicle in accordance with a detection result of the carbon dioxide concentration detected by the concentration sensor. The detection command means causes the concentration sensor to perform operation when the fan has been operated for a certain period of time or longer. The setting means sets an output value output from the concentration sensor operated by the detection command means as a reference value for carbon dioxide concentration.

### BRIEF DESCRIPTION OF THE DRAWINGS

Fig. 1 is a schematic cross-sectional view illustrating a vehicle including a vehicle ventilating apparatus according to a first embodiment of the present invention;
Fig. 2 is a block diagram showing the electrical configuration of the vehicle ventilating apparatus of Fig. 1;
Fig. 3 is a partially cut away front view illustrating a carbon dioxide concentration sensor of the vehicle ventilating apparatus of Fig. 1;
Fig. 4 is a graph showing the relationship between carbon dioxide concentration and output values of the concentration sensor of Fig. 3;
Fig. 5 is a view that is the same as the schematic cross-sectional view of Fig. 1 except that the position of a switching damper of the vehicle apparatus is different;
Fig. 6 is a flowchart showing the procedure for updating a reference value for carbon dioxide concentration by the vehicle ventilating apparatus of Fig. 1;
Fig. 7 is a block diagram showing the electrical configuration of a vehicle ventilating apparatus according to a second embodiment of the present invention; and
Fig. 8 is a flowchart showing the procedure for updating a reference value for carbon dioxide concentration by the vehicle ventilating apparatus according to the second embodiment.

### BEST MODE FOR CARRYING OUT THE INVENTION

### First Embodiment

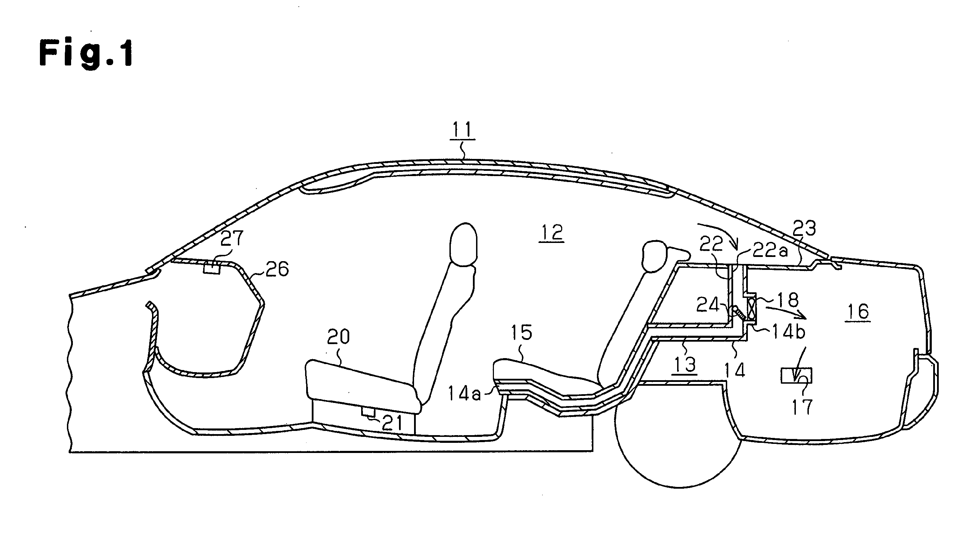

A first embodiment of the present invention will now be described with reference to Figs. 1 to 6.

A vehicle 11 shown in Fig. 1 is equipped with a ventilating apparatus 13, which ventilates a passenger compartment 12. The ventilating apparatus 13 includes an exhaust duct 14, which is arranged along the under surface and the rear surface of a rear seat 15 and connects the inside and outside of the passenger compartment 12 to each other. The exhaust duct 14 includes an inlet opening 14a, which faces forward underneath the rear seat 15, and an outlet opening 14b, which is located in a trunk compartment 16. A vent hole 17 is provided at the lower part of the trunk compartment 16.

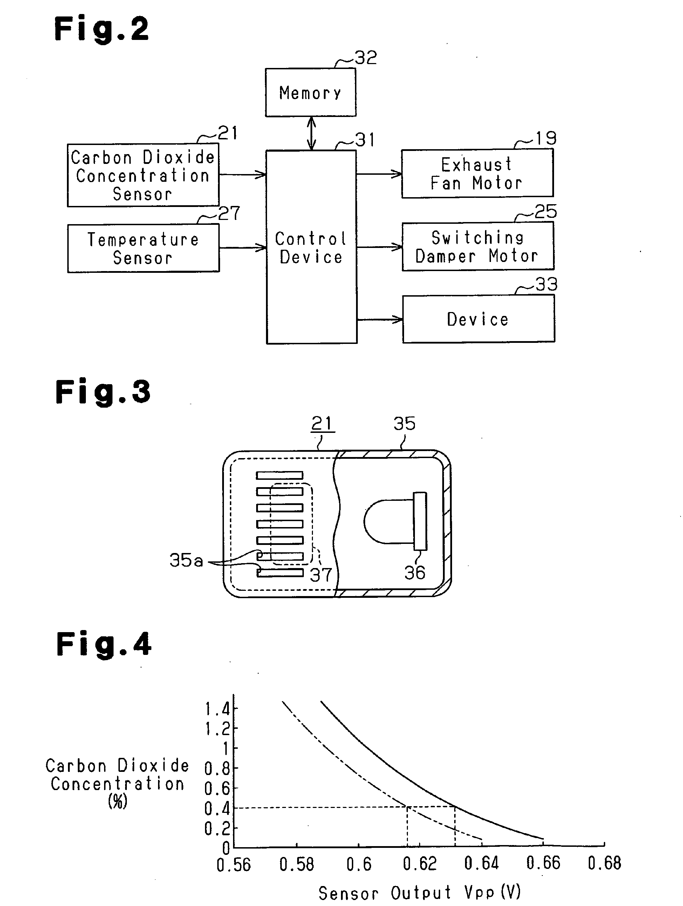

An exhaust fan 18 is arranged in the exhaust duct 14 in the vicinity of the outlet opening 14b. When the exhaust fan 18 is rotated by means of an exhaust fan motor 19 shown in Fig. 2, the air in the passenger compartment 12 is drawn into the exhaust duct 14 from the inlet opening 14a, and is introduced into the trunk compartment 16 through the outlet opening 14b. The air introduced into the trunk compartment 16 is then exhausted to the outside of the vehicle 11 through the vent hole 17.

A carbon dioxide concentration sensor 21, which detects the carbon dioxide (CO₂) concentration of the air in the passenger compartment 12, is arranged at the lower part of the passenger compartment 12, for example, underneath a front seat 20. The detection result of the passenger compartment carbon dioxide concentration detected by the concentration sensor 21 is output to a control device 31 shown in Fig. 2 described below.

As shown in Fig. 1, part of the exhaust duct 14 located upstream of the exhaust fan 18 is connected to a branch duct 22. The branch duct 22 has an inlet opening 22a arranged in a package tray 23 at the rear part of the passenger compartment 12. A switching means, which is a switching damper 24 in this embodiment, is provided in the above mentioned part of the exhaust duct 14 located upstream of the exhaust fan 18. The switching damper 24 selectively connects the exhaust fan 18 (the outlet opening 14b) to the exhaust duct 14 and the branch duct 22.

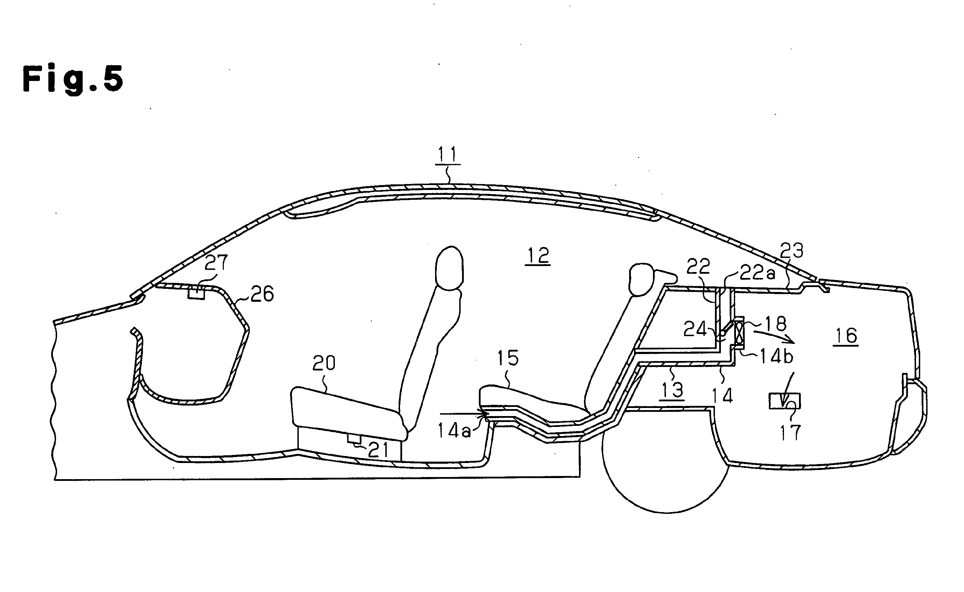

When the ignition switch, which is not shown, is off, a switching damper motor 25 shown in Fig. 2 rotates the switching damper 24 to be located at the position shown in Fig. 1, so that the outlet opening 14b is connected to the branch duct 22. When the ignition switch is on, the switching damper motor 25 rotates the switching damper 24 to be located at the position shown in Fig. 5, so that the outlet opening 14b is connected to the exhaust duct 14.

As shown in Fig. 1, temperature detecting means, which is a temperature sensor 27 in this embodiment, is arranged in the passenger compartment 12, for example, on an instrumental panel 26. The temperature sensor 27 detects the temperature in the passenger compartment 12. The detection result of the passenger compartment temperature detected by the temperature sensor 27 is output to the control device 31.

The electric circuit configuration for controlling the vehicle ventilating apparatus 13 having the structure as described above will now be described.

As shown in Fig. 2, the control device 31 controls the operation of the ventilating apparatus 13 in accordance with a program stored in a memory 32. The memory 32 stores data required for executing the program, for example, a reference value and first and second specified values (upper limit value and permissible value) for carbon dioxide concentration in the passenger compartment 12, and first and second specified values (upper limit value and permissible value) for the temperature in the passenger compartment 12. The reference value for carbon dioxide concentration corresponds to the carbon dioxide concentration (approximately 0.04%) in normal air (atmospheric air).

The control device 31 functions as determining means for determining whether there is any occupant in the passenger compartment 12. If it is determined that there is an occupant in the passenger compartment 12 based on that the ignition switch is on, the control device 31 receives the detection result of the passenger compartment carbon dioxide concentration detected by the concentration sensor 21, and outputs an operation command to the switching damper motor 25 such that the switching damper 24 is arranged at the position shown in Fig. 5. If it is determined that there is no occupant in the passenger compartment 12 based on that the ignition switch is off, the control device 31 receives the detection result of the passenger compartment temperature detected by the temperature sensor 27, and outputs an operation command to the switching damper motor 25 such that the switching damper 24 is arranged at the position shown in Fig. 1. The control device 31 outputs an operation command to the exhaust fan motor 19 and operates the exhaust fan 18 in accordance with the detection result from the concentration sensor 21 or the temperature sensor 27.

The control device 31 also functions as deciding means, which decides operation of a specific device 33 mounted on the vehicle 11 such as an air conditioning system or a window opening device in accordance with the detection result of the passenger compartment carbon dioxide concentration detected by the concentration sensor 21.

Furthermore, when it is determined that there is no occupant in the passenger compartment 12, and that the fan 18 has been operating for a predetermined time period or longer (in other words, the level of the carbon dioxide concentration of the air in the passenger compartment around the concentration sensor 21 is at the level of normal air appropriate for setting the reference value for the carbon dioxide concentration), the control device 31 functions also as detection command means, which causes the concentration sensor 21 to perform operation.

The structure of the main part of the vehicle ventilating apparatus 13 according to the present embodiment will now be described with reference to Figs. 2 to 4.

As shown in Fig. 3, the concentration sensor 21 includes a case 35 provided with vent holes 35a, a light emitting source 36, which includes an infrared emitting filament and is provided in the case 35, and a light receiving element 37 provided in the case 35 corresponding to the light emitting source 36. The infrared radiation output from the light emitting source 36 is absorbed by air by the amount corresponding to the carbon dioxide concentration in the air, and is then received by the light receiving element 37. The light receiving element 37 outputs an output value (voltage value) that is proportional to the amount of received infrared radiation to the control device 31. The control device 31 computes the carbon dioxide concentration of the air in the passenger compartment 12 based on the output value from the light receiving element 37.

The control device 31 functions as setting means, which sets the output value (voltage value) from the concentration sensor 21 as a reference value for carbon dioxide concentration. The set reference value is stored in the memory 32. The method for setting the reference value will be described with reference to Fig. 4. Fig. 4 shows the output characteristics of the concentration sensor 21 when the light emitting source 36 receives a current of 0.05 amperes and a voltage of 5 volts, and the light path length from the light emitting source 36 to the light receiving element 37 is 7.5 mm. The solid line in Fig. 4 shows the initial (not changed over time) output characteristics of the concentration sensor 21. If the concentration sensor 21 changes over time (time degradation), the output value (voltage value) from the concentration sensor 21 is decreased as compared to the initial value regardless of the carbon dioxide concentration as shown by the chain line in Fig. 4. To address this, the control device 31 updates the reference value for carbon dioxide concentration stored in the memory 32 to the output value (voltage value) output from the concentration sensor 21 when it is determined that the level of the carbon dioxide concentration in the passenger compartment 12 is equal to the level of normal air.

The operation of the ventilating apparatus 13 configured as described above will now be described.

When the ignition switch is off, for example, when the vehicle 11 is parked, the switching damper 24 is switched to the position shown in Fig. 1, so that the outlet opening 14b is connected to the branch duct 22. At this time, if the temperature in the passenger compartment 12 detected by the temperature sensor 27 exceeds the first specified value (upper limit value, for example 70°C) for temperature in the passenger compartment 12 stored in the memory 32, the control device 31 outputs an operation command to the exhaust fan motor 19 so as to rotate the exhaust fan 18. Thus, the air (hot air) in the passenger compartment 12 is drawn into the branch duct 22 through the inlet opening 22a, and after being introduced into the trunk compartment 16 through the outlet opening 14b, the air is exhausted to the outside of the vehicle 11 through the vent hole 17. Simultaneously, the outside air is introduced into the passenger compartment 12 through gaps in the vehicle 11, for example, through gaps of the doors. After that, if the temperature in the passenger compartment 12 is decreased to the second specified value (permissible value, for example, 60°C) for temperature in the passenger compartment 12 stored in the memory 32, the rotation of the exhaust fan 18 is stopped. Thus, the temperature in the passenger compartment 12 is prevented from being excessively increased, for example, when the vehicle 11 is parked for a long period of time.

When the ignition switch is on, for example, when the vehicle 11 is travelling, the switching damper 24 is switched to the position shown in Fig. 5, so that the outlet opening 14b is connected to the exhaust duct 14. At this time, if the carbon dioxide concentration in the passenger compartment 12 detected by the concentration sensor 21 exceeds the first specified value (upper limit value, for example, 0.5%) for carbon dioxide concentration in the passenger compartment 12 stored in the memory 32 when introduction of the outside air into the passenger compartment 12 is stopped, for example, when an air conditioning system (not shown) of the vehicle 11 is operated in an internal circulation mode, the control device 31 outputs an operation command to the exhaust fan motor 19 so as to rotate the exhaust fan 18. Thus, the air in the passenger compartment 12 is drawn into the exhaust duct 14 through the inlet opening 14a, and then introduced into the trunk compartment 16 through the outlet opening 14b. After that, the air is exhausted to the outside of the vehicle 11 through the vent hole 17. Simultaneously, the outside air is introduced into the passenger compartment 12 through gaps in the vehicle 11, for example, through gaps of the doors. After that, if the carbon dioxide concentration in the passenger compartment 12 is decreased to the second specified value (permissible value, for example, 0.3%) for carbon dioxide concentration in the passenger compartment 12 stored in the memory 32, the rotation of the exhaust fan 18 is stopped. Thus, the carbon dioxide concentration in the passenger compartment 12 is prevented from being excessively increased, and the occupant is prevented from feeling uncomfortable, for example, when the vehicle 11 is traveling.

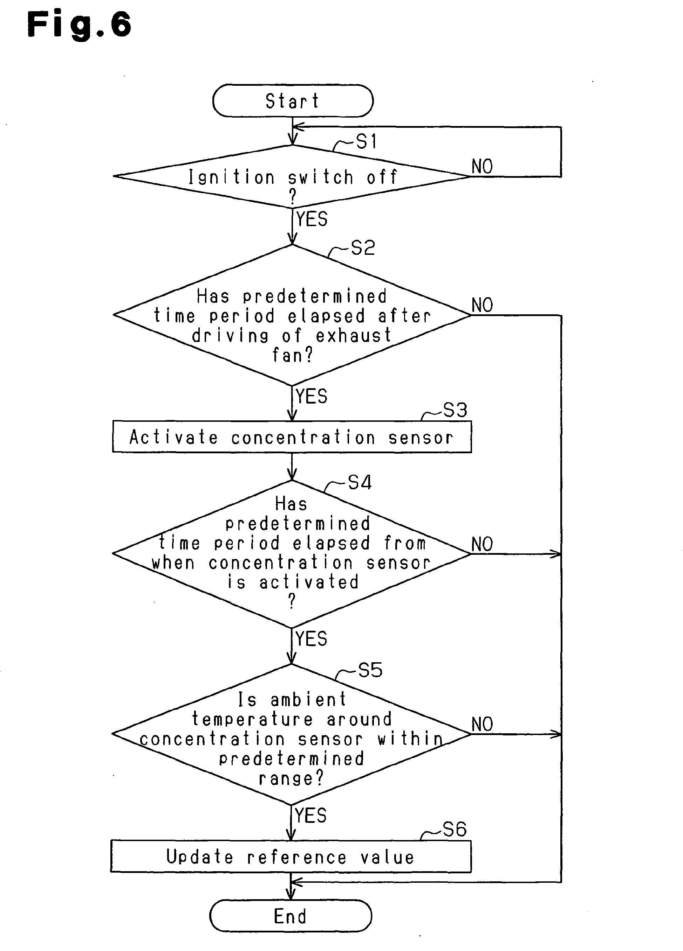

The procedure for updating the reference value for the carbon dioxide concentration stored in the memory 32 will now be described with reference to the flowchart of Fig. 6.

First, in step S1, the control device 31 determines whether the ignition switch is off, that is, whether there is an occupant in the passenger compartment 12. If it is determined that there is no occupant in the passenger compartment 12 based on that the ignition switch is off, the control device 31 determines in step S2 whether a predetermined time period (for example, five minutes) has elapsed from when driving of the exhaust fan 18 has been started, that is, whether the level of the carbon dioxide concentration of the air in the passenger compartment around the concentration sensor 21 is equal to the level of the normal air appropriate for setting the reference value for carbon dioxide concentration. If it is determined that the predetermined time period has elapsed from when driving of the exhaust fan 18 has been started, the control device 31 activates the concentration sensor 21 in step S3. If it is determined in step S2 that the predetermined time period has not elapsed from when driving of the exhaust fan 18 has been started, the control device 31 maintains the concentration sensor 21 off and does not update the reference value.

After activating the concentration sensor 21 in step S3, the control device 31 determines in step S4 whether a predetermined time period (for example, 60 seconds) has elapsed from when the concentration sensor 21 has been activated. The predetermined time period in step S4 is set to the length longer than or equal to the time required for operation of the concentration sensor 21 to stabilize. If it is determined in step S4 that the predetermined time period has elapsed from when the concentration sensor 21 is activated, the control device 31 determines in step S5 whether the ambient temperature around the concentration sensor 21 measured by the temperature sensor 27 is within the predetermined temperature range (for example, 55°C or lower). The predetermined temperature range in step S5 is the temperature range in which the concentration sensor 21 performs operation properly, preferably, for example, 10°C or higher. If it is determined in step S5 that the ambient temperature around the concentration sensor 21 is within the predetermined temperature range, the control device 31 updates in step S6 the reference value for carbon dioxide concentration stored in the memory 32 to the output value (voltage value) currently output from the concentration sensor 21. If the decision outcome of step S4 or step S5 is negative, that is, if it is determined in step S4 that the predetermined time period has not elapsed from when the concentration sensor 21 is activated, or if it is determined in step S5 that the ambient temperature around the concentration sensor 21 is not within the predetermined temperature, the control device 31 does not update the reference value in step S6.

Since the reference value for carbon dioxide concentration stored in the memory 32 is updated in this manner, the detection accuracy of the carbon dioxide concentration detected by the concentration sensor 21 is maintained properly. As a result, the exhaust fan motor 19 or another device 33, such as the air conditioning system or the window opening device, that operates in accordance with the detection result of the carbon dioxide concentration detected by the concentration sensor 21 operates properly.

The first embodiment has the following advantages.

The concentration sensor 21 precisely detects the carbon dioxide concentration in the passenger compartment 12 regardless of the changes over time (time degradation) of the light emitting source 36 and the light receiving element 37 since the reference value for carbon dioxide concentration stored in the memory 32 is updated as needed. Thus, it is not necessary to provide the conventionally required two infrared sensors, which detect different wavelength components, the interferometer mirrors, or the filters. The structure of the concentration sensor 21 is therefore simple and the number of the components is reduced. This reduces the manufacturing costs of the vehicle ventilating apparatus 13.

The reference value for carbon dioxide concentration is updated only after the predetermined time period has elapsed from when the concentration sensor 21 is activated. Thus, the reference value is prevented from being updated using the output value of the concentration sensor 21 when the operation is unstable, which permits the reference value to be updated properly.

The reference value for carbon dioxide concentration is updated when the ambient temperature around the concentration sensor 21 is within the predetermined temperature range. Thus, the reference value is prevented from being updated using the output value of the concentration sensor 21 at the temperature at which operation cannot be performed normally, which permits the reference value to be updated properly.

The reference value for carbon dioxide concentration is updated when there is no occupant in the passenger compartment 12. Thus, the occupant is prevented from being affected by the series of operations performed to update the reference value.

When the carbon dioxide concentration in the passenger compartment 12 is increased, air in the passenger compartment 12 is discharged to the outside of the vehicle 11 without introducing the outside air into the passenger compartment 12 in a positive manner, so as to lower the carbon dioxide concentration. Thus, for example, when the outside air is contaminated such as when the vehicle 11 is travelling through a tunnel, comfort in the passenger compartment 12 is prevented from being decreased by the contaminated air that is introduced into the passenger compartment 12 rapidly by a large amount.

Since the inlet opening 14a of the exhaust duct 14 is arranged underneath the rear seat 15, the carbon dioxide accumulated in the lower part of the passenger compartment 12 is efficiently drawn into the exhaust duct 14 from the inlet opening 14a. This permits the carbon dioxide concentration in the passenger compartment 12 to be efficiently reduced when the carbon dioxide concentration in the passenger compartment 12 is increased.

When the temperature in the passenger compartment 12 is increased over a predetermined upper limit value such as when the vehicle 11 is parked for a long time, and when the carbon dioxide concentration in the passenger compartment 12 is increased over a predetermined upper limit value such as when the vehicle 11 is travelling, the air in the passenger compartment 12 is discharged by the operation of the common exhaust fan 18. This simplifies the structure of the ventilating apparatus 13.

### Second Embodiment

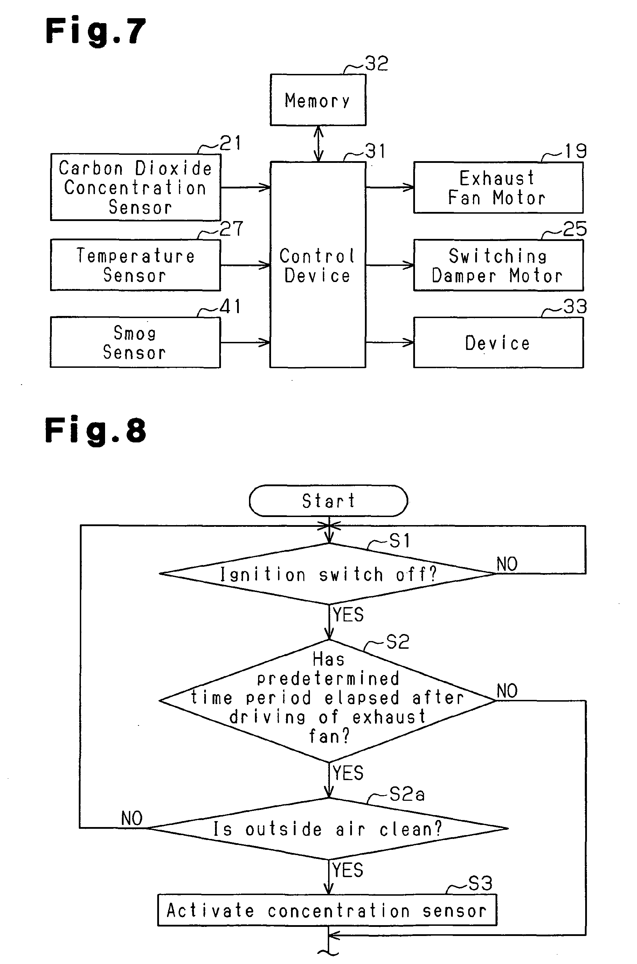

A second embodiment of the present invention will now be described with reference to Figs. 7 and 8. The differences from the first embodiment will mainly be discussed below.

The vehicle ventilating apparatus according to the second embodiment differs from the vehicle ventilating apparatus 13 of the first embodiment in that the ventilating apparatus of the second embodiment includes contamination degree detecting means, which is a smog sensor 41 in the second embodiment, in the vehicle engine compartment as shown in Fig. 7. The smog sensor 41 detects the contamination degree of the outside air, for example, the level of smog (such as nitrogen dioxide (NO₂), carbon monoxide (CO)). The detection result of the smog level of the outside air detected by the smog sensor 41 is output to the control device 31.

Fig. 8 is a flowchart showing the procedure for updating the reference value for carbon dioxide concentration by the vehicle ventilating apparatus of the second embodiment. As shown in Fig. 8, the procedure of the second embodiment differs from the first embodiment shown in Fig. 6 in that a process of step S2a, in which the control device 31 determines whether the outside air is clean, is executed between step S2 and step S3. That is, if it is determined in step S2 that a predetermined time period has elapsed from when driving of the exhaust fan 18 is started, the control device 31 determines in step S2a whether the outside air is clean based on the detection result of the smog level of the outside air detected by the smog sensor 41. More specifically, in step S2a, if the smog level of the outside air detected by the smog sensor 41 does not exceed a predetermined specified value, the control device 31 determines that the outside air is clean, and if the smog level of the outside air detected by the smog sensor 41 exceeds the predetermined specified value, the control device 31 determines that the outside air is not clean. If it is determined that the outside air is clean, the control device 31 activates the concentration sensor 21 in step S3. If it is determined that the outside air is not clean, the procedure of the control device 31 returns to step S1 of Fig. 8.

Therefore, the second embodiment has the following advantage in addition to the advantages of the above-mentioned first embodiment.

The reference value for carbon dioxide concentration is updated when the outside air is clean. Thus, the reference value is prevented from being updated using the output value of the concentration sensor 21 when the carbon dioxide concentration of the air in the passenger compartment is affected by the contaminated outside air, which allows the reference value to be more properly updated.

The above embodiments may be modified as follows.

The exhaust duct 14 and the branch duct 22 may be located at positions different from the above embodiments. For example, the exhaust duct 14 and the branch duct 22 may be arranged along the ceiling of the passenger compartment 12.

Instead of the concentration sensor 21 shown in Fig. 3, a concentration sensor configured by a solid electrolyte may be used.

## Claims

1. A ventilating apparatus for a vehicle (11), comprising:
temperature detecting means (27) detecting a temperature in a passenger compartment (12) of the vehicle (11);
determining means (31), which determines whether there is any occupant in the passenger compartment (12); and
a duct (14) connecting the inside and the outside of the passenger compartment (12), the duct (14) being provided with a fan (13) located inside the duct (14),
a concentration sensor (21) for detecting carbon dioxide concentration in the passenger compartment (12);
deciding means (31), which decides the operation of a device mounted on the vehicle in accordance with a detection result of the carbon dioxide concentration detected by the concentration sensor (21);
detection command means (31), which causes the concentration sensor (21) to perform operation when the fan (13) has been operated for a certain period of time or longer; and
setting means (31), which sets an output value output from the concentration sensor (21) operated by the detection command means (30) as a reference value for carbon dioxide concentration, the vehicle ventilating apparatus being **characterized by** further comprising: a control device (31) which is arranged to operate the fan (13) so that the air in the passenger compartment (12) is discharged to the outside of the vehicle (11) through the duct (14), when the temperature in the passenger compartment exceeds a specified value in a state where there is no occupant in the passenger compartment.

2. The apparatus according to claim 1, wherein, after a predetermined time period has elapsed from when the concentration sensor starts being operated by the detection command means, the setting means sets the output value output from the concentration sensor as the reference value.

3. The apparatus according to claim 1 or 2, wherein, when an ambient temperature around the concentration sensor is lower than or equal to a predetermined temperature, the setting means sets the output value output from the concentration sensor as the reference value.

4. The apparatus according to any one of claims 1 to 3, further comprising contamination degree detecting means, which detects the contamination degree of the outside air, wherein, when the contamination degree of the outside air detected by the contamination degree detecting means is less than or equal to a specified value, setting of the reference value by the setting means is allowed, and wherein, when the contamination degree of the outside air detected by the contamination degree detecting means is higher than the specified value, setting of the reference value by the setting means is prohibited.

## Patentansprüche

1. Lüftungsvorrichtung für ein Fahrzeug (11), mit
einer Temperaturerfassungseinrichtung (27), die eine Temperatur in einem Passagierabteil (12) des Fahrzeugs (11) erfasst;
einer Bestimmungseinrichtung (31), die bestimmt, ob es irgendeinen Insassen in dem Passagierabteil (12) gibt; und
einem Kanal (14), der die Innenseite und die Außenseite des Passagierabteils (12) verbindet, wobei der Kanal (14) mit einem im Inneren des Kanals (14) angeordneten Ventilator (13) versehen ist;
einem Konzentrationssensor (21) zur Erfassung einer Kohlenstoffdioxidkonzentration in dem Passagierabteil (12);
einer Entscheidungseinrichtung (31), die den Betrieb eines an dem Fahrzeug angebrachten Gerätes gemäß einem Erfassungsergebnis der durch den Konzentrationssensor (21) erfassten Kohlenstoffdioxidkonzentration entscheidet;
einer Erfassungsbefehlseinrichtung (31), die den Konzentrationssensor (21) dazu bringt, einen Betrieb auszuführen, wenn der Ventilator (13) für eine bestimmte Zeitdauer oder länger betrieben wurde; und
einer Einstelleinrichtung (31), die einen von dem durch die Erfassungsbefehlseinrichtung (31) betriebenen Konzentrationssensor (21) ausgegebenen Ausgabewert als einen Referenzwert für eine Kohlenstoffdioxidkonzentration einstellt,
wobei die Fahrzeuglüftungsvorrichtung **dadurch gekennzeichnet ist, dass** sie ferner aufweist:
ein Steuergerät (31), das dazu angeordnet ist, um den Ventilator (13) zu betreiben, so dass die Luft in dem Passagierabteil (12) durch den Kanal (14) zu der Außenseite des Fahrzeugs (11) abgeführt wird, wenn die Temperatur in dem Passagierabteil (12) einen festgelegten Wert in einem Zustand überschreitet, in dem es keinen Insassen in dem Passagierabteil gibt.

2. Vorrichtung nach Anspruch 1, wobei, nachdem eine vorbestimmte Zeitdauer verstrichen ist seit der Konzentrationssensorstart durch die Erfassungsbefehlseinrichtung betrieben wurde, die Einstelleinrichtung den von dem Konzentrationssensor ausgegebenen Ausgabewert als den Referenzwert einstellt.

3. Vorrichtung nach Anspruch 1 oder 2, wobei, wenn eine Umgebungstemperatur rund um den Konzentrationssensor kleiner als oder gleich wie eine vorbestimmte Temperatur ist, die Einstelleinrichtung den von dem Konzentrationssensor ausgegebenen Ausgabewert als den Referenzwert einstellt.

4. Vorrichtung nach einem der Ansprüche 1 bis 3, ferner mit einer Verschmutzungsgraderfassungseinrichtung, die den Verschmutzungsgrad der Außenluft erfasst, wobei, wenn der durch die Verschmutzungsgraderfassungseinrichtung erfasste Verschmutzungsgrad der Außenluft kleiner als oder gleich wie ein festgelegter Wert ist, eine Einstellung des Referenzwertes durch die Einstelleinrichtung erlaubt ist, und wobei, wenn der durch die Verschmutzungsgraderfassungseinrichtung erfasste Verschmutzungsgrad der Außenluft größer als der festgelegte Wert ist, eine Einstellung des Referenzwertes durch die Einstelleinrichtung verboten ist

## Revendications

1. Appareil de ventilation pour un véhicule (11), comprenant :
un moyen de détection de température (27) détectant une température dans un habitacle (12) du véhicule (11) ;
un moyen de détermination (31), qui détermine s'il y a un occupant quelconque dans l'habitacle (12) ; et
une conduite (14) reliant l'intérieur et l'extérieur de l'habitacle (12), la conduite (14) étant pourvue d'un ventilateur (13) situé à l'intérieur de la conduite (14),
un capteur de concentration (21) destiné à détecter la concentration du dioxyde de carbone dans l'habitacle (12) ;
un moyen de décision (31), qui détermine le fonctionnement d'un dispositif monté sur le véhicule selon un résultat de détection de la concentration du dioxyde de carbone détectée par le capteur de concentration (21) ;
un moyen de commande de détection (31), qui amène le capteur de concentration (21) à effectuer le fonctionnement lorsque le ventilateur (13) a été actionné pendant une certaine durée ou plus ; et
un moyen de réglage (31), qui règle une valeur de sortie délivrée en sortie à partir du capteur de concentration (21) actionné par le moyen de commande de détection (31) en tant que valeur de référence pour la concentration du dioxyde de carbone,
l'appareil de ventilation du véhicule étant **caractérisé par** le fait de comprendre en outre :
un dispositif de commande (31) qui est agencé pour faire fonctionner le ventilateur (13) de sorte que l'air dans l'habitacle (12) soit évacué à l'extérieur du véhicule (11) à travers la conduite (14), lorsque la température dans l'habitacle (12) dépasse une valeur spécifiée dans un état où il n'y a pas d'occupant dans l'habitacle.

2. Appareil selon la revendication 1, dans lequel, après écoulement d'une durée prédéterminée depuis le démarrage du fonctionnement du capteur de concentration par le moyen de commande de détection, le moyen de réglage règle la valeur de sortie délivrée en sortie à partir du capteur de concentration comme étant la valeur de référence.

3. Appareil selon la revendication 1 ou 2, dans lequel, lorsque la température ambiante autour du capteur de concentration est inférieure ou égale à une température prédéterminée, le moyen de réglage règle la valeur de sortie délivrée en sortie à partir du capteur de concentration comme étant la valeur de référence.

4. Appareil selon l'une quelconque des revendications 1 à 3, comprenant en outre un moyen de détection de degré de contamination, qui détecte le degré de contamination de l'air extérieur, où, lorsque le degré de contamination de l'air extérieur détecté par le moyen de détection de degré de contamination est inférieur ou égal à une valeur spécifiée, le réglage de la valeur de référence par le moyen de réglage est autorisé, et où, lorsque le degré de contamination de l'air extérieur détecté par le moyen de détection de degré de contamination est supérieur à la valeur spécifiée, le réglage de la valeur de référence par le moyen de réglage est interdit.
